# EUROPÄISCHE PATENTSCHRIFT

(11) **EP 1 749 351 B1**
(45) Veröffentlichungstag und Bekanntmachung des Hinweises auf die Patenterteilung: **08.04.2009**
(21) Anmeldenummer: 05716728.0
(22) Anmeldetag: 17.02.2005
(51) Int. Cl.: H04B 7/005

(54) **VERFAHREN ZUM EINSTELLEN DER SENDELEISTUNG FÜR EINE FUNKVERBINDUNG, DIE ZWEI UNTERSCHIEDLICHEN KANÄLE BENUTZT, UND ENTSPRECHENDE FUNKSTATION**
METHOD FOR ADJUSTING THE OUTPUT POWER FOR A RADIO LINK WHICH USES TWO DIFFERENT CHANNELS, AND CORRESPONDING RADIO STATION
PROCEDE POUR REGLER LA PUISSANCE D'EMISSION D'UNE LIAISON RADIO PASSANT PAR DEUX CANAUX DIFFERENTS, ET STATION RADIO CORRESPONDANTE

(30) Priorität: 26.03.2004 DE 102004014998
(43) Veröffentlichungstag der Anmeldung: 07.02.2007
(73) Patentinhaber: Nokia Siemens Networks GmbH & Co. KG, 81541 München (DE)
(72) Erfinder: OESTREICH, Stefan, 83607 Holzkirchen (DE)
(86) Internationale Anmeldenummer: PCT/EP2005/050710
(87) Internationale Veröffentlichungsnummer: WO 2005/093965

(56) Entgegenhaltungen:
- EP-A- 1 089 458
- EP-A- 1 111 809
- DE-A1- 10 306 170
- US-A1- 2003 045 319
- US-B1- 6 173 162

## Beschreibung

Die Erfindung betrifft ein Verfahren zum Einstellen der Sendeleistung für eine Funkverbindung, die zwei unterschiedliche Kanäle benutzt, und eine entsprechende Funkstation.

In Funkkommunikationssystemen erfolgt eine Übertragung von Daten mittels elektromagnetischer Wellen über die Luft. Ein Beispiel für Funkkommunikationssysteme sind die Mobilfunksysteme. Der derzeit am weitesten verbreitete Standard für Mobilfunksysteme ist der GSM- (Global System of Mobile Communication) Standard, der der zweiten Generation von Mobilfunksystemen zugerechnet wird. Derzeit wird die dritte Generation von Mobilfunksystemen implementiert, zu denen beispielsweise UMTS (Universal Mobile Telecommunications Standard) mit seinen zwei Varianten TDD (Time Division Duplex) und FDD (Frequency Division Duplex) gehört.

Der UMTS-Standard sieht ein CDMA-(Code Division Multiple Access)Zugriffsverfahren vor, bei dem unterschiedliche Verbindungen durch unterschiedliche Spreizcodes (Spreading Codes) und/oder unterschiedliche Verwürfelungscodes (Scrambling Codes) unterschieden werden. Einer Verbindung werden ein oder mehrere Kanäle zugeordnet. Jedem Kanal ist ein Spreizcode und ein Verwürfelungscode zugeordnet. Es steht ein so genannter primärer Verwürfelungscode (primary scrambling codes) und mehrere sekundäre Verwürfelungscodes (secondary scrambling codes) zur Verfügung. Alle Kanäle mit dem gleichen Verwürfelungscode sind orthogonal zueinander. So sind z. B. alle Kanäle, die den primären Verwürfelungscode verwenden, orthogonal zueinander. Dagegen sind die Kanäle mit dem primären Code nicht orthogonal zu den Kanälen mit einem der sekundären Verwürfelungscodes. Die gleichzeitige Verwendung von Kanälen mit orthogonalen Codes verursacht weniger gegenseitige Störungen als die Verwendung von zueinander nicht orthogonalen Codes. Dabei ist zu beachten, dass die Orthogonalität zwar senderseitig vorliegen kann, durch ungünstige Übertragungsbedingungen (Mehrwegeausbreitung) jedoch empfängerseitig beeinträchtigt sein kann.

Oft ist es notwendig, dass eine Mobilstation während des Betriebs einer verbindung auf einem ersten Kanal andere Kanäle ausmisst, beispielsweise, um einen Kanalwechsel bzw. einen Wechsel zu einer anderen Funkzelle zu ermöglichen. Hierfür ist es bei UMTS vorgesehen, dass die Mobilstation in den so genannten compressed mode versetzt wird, bei dem zu übertragende Daten zur Mobilstation nur während einer verkürzten Zeitdauer übertragen werden, so dass während der übrigen Zeit Messungen von der Mobilstation durchgeführt werden können. Um die für die Übertragung vorgesehenen Daten während der verkürzten Zeitdauer übertragen zu können, wird im compressed mode kurzzeitig ein Spreizcode mit einem kleineren Spreizfaktor verwendet, als vor dem Wechsel in dem compressed mode und nach Beendigung des compressed mode. Dabei ist es sinnvoll, die Sendeleistung umgekehrt proportional zur Absenkung des Spreizfaktors zu erhöhen, um annähernd dieselbe Empfangsqualität zu gewährleisten.

Der Erfindung liegt die Aufgabe zugrunde, ein vorteilhaftes Verfahren zur Einstellung der Sendeleistung für eine Funkverbindung, die zwei unterschiedliche Kanäle benutzt, anzugeben.

Diese Aufgabe wird mit einem Verfahren sowie einer Station gemäß den unabhängigen Ansprüchen gelöst. Vorteilhafte Aus- und Weiterbildungen der Erfindung sind Gegenstand der abhängigen Ansprüche.

Das erfindungsgemäße Verfahren zum Einstellen der Sendeleistung für die Übertragung von Daten einer Verbindung in einem Funkkommunikationssystem sieht vor, dass
- zunächst Daten der Verbindung über einen ersten Kanal übertragen werden, während die Qualität der Datenübertragung geregelt wird, indem die Sendeleistung entsprechend verändert wird,
- anschließend Daten der Verbindung über einen zweiten Kanal übertragen werden, wobei die Sendeleistung anfänglich auf einen Wert eingestellt wird, der vom Wert der Sendeleistung am Ende der Übertragung über den ersten Kanal sowie von einer Änderung der Empfangsbedingungen der Verbindung beim Wechsel vom ersten zum zweiten Kanal abhängt.

Dies ermöglicht vorteilhaft, dass die Sendeleistung zu Beginn der Datenübertragung über den zweiten Kanal zielgerichtet auf einen angemessenen wert eingestellt werden kann. Durch die Berücksichtigung des Wertes der Sendeleistung bei Beendigung der Datenübertragung über den ersten Kanal werden die Ergebnisse der Regelung der Übertragungsqualität über den ersten Kanal verwendet, um die Sendeleistung für den zweiten Kanal festzulegen. Durch die zusätzliche Berücksichtigung der Änderung der Empfangsbedingungen beim Wechsel der Kanäle kann die (anfängliche) Sendeleistung für die Übertragung über den zweiten Kanal individuell an die jeweils herrschenden Empfangsbedingungen und damit in in höherem Maße zutreffender Weise ermittelt werden. Es erfolgt also keine Anpassung der Sendeleistung um einen im vorhinein festgelegten Faktor, der z.B. vom Verhältnis der Spreizfaktoren im Falle von CDMA-Kanälen abhängt, wie beim oben beschriebenen UMTS-Standard. Vielmehr ist der zu verwendende Faktor abhängig von den herrschenden Empfangsbedingungen auf beiden Kanälen.

Die Erfindung eignet sich zur Anwendung in beliebigen Funksystemen mit mobilen oder statischen Funkstationen, insbesondere jedoch in Mobilfunksystemen. Den Kanälen können beliebige Funkressourcen zugeordnet sein, beispielsweise Spreizcodes, Verwürfelungscodes, Zeitschlitze oder Frequenzbänder, je nach verwendetem Multiplexverfahren (CDMA, TDMA, FDMA oder Kombinationen davon).

Unter Empfangsbedingungen sind hier alle Bedingungen zu verstehen, die den Empfang an der empfangenden Station betreffen, die jedoch nicht allein durch die sendende Station durch das Senden der Daten der betrachteten Verbindung verursacht sind. Daher fallen beispielsweise Interferenzbedingungen an der empfangenden Station unter diese Definition, nicht jedoch die (sendeseitige) Verwendung unterschiedlicher Spreizfaktoren für die beiden Kanäle. Ebenso fällt Fading unter die genannte Definition, da dieses nicht durch die sendende Station verursacht wird.

Nach einer Ausführungsform der Erfindung wird die Änderung der Empfangsbedingungen durch Berücksichtigung von Interferenzen auf den beiden Kanälen bei der Einstellung des anfänglichen Wertes der Sendeleistung auf dem zweiten Kanal berücksichtigt. Liegen für den zweiten Kanal z.B. stärkere Interferenzen vor als für den ersten, ist die anfängliche Sendeleistung für den zweiten Kanal höher zu wählen, als wenn die Interferenzen für den zweiten Kanal niedriger sind als für den ersten Kanal oder wenn die Interferenzen in beiden Fällen gleich stark sind.

Ein Beispiel für das Vorliegen unterschiedlich starker Interferenzen für die beiden Kanäle ist, wenn einer der Kanäle einen primären Verwürfelungscode und der andere Kanal einen sekundären Verwürfelungscode nach dem UMTS-Standard verwendet. In der Praxis werden bevorzugt pro Funkzelle eines UMTS-Mobilfunksystems eine größere Anzahl von Verbindungen unterhalten, die den primären Verwürfelungscode verwenden, als solche, die einen sekundären Verwürfelungscode verwenden. Da die Kanäle, die den primären Code verwenden, orthogonal zueinander sind, erzeugen sie keine gegenseitig Interferenz und stören sich gegenseitig nicht. Da sie aber andererseits nicht orthogonal zu den Kanälen mit sekundären Codes sind, stört ihre Verwendung Verbindungen, die die sekundären Codes verwenden. Umgekehrt stören zwar auch Kanäle mit sekundären Codes die primären Codes, sie sind jedoch nicht so zahlreich, weshalb die Störungen geringer sind. Daher sind Interferenzen für Verbindungen mit einem sekundären Verwürfelungscode in der Regel stärker als für Verbindungen mit einem primären Verwürfelungscode. Die Erfindung ermöglicht nun, in solchen Fällen die unterschiedliche Interferenz für Kanäle mit primären bzw. sekundären Codes zu berücksichtigen, indem die anfängliche Sendeleistung für den zweiten Kanal entsprechend um einen Korrekturfaktor erhöht wird (falls der erste Kanal einen primären und der zweite Kanal einen sekundären Verwürfelungscode verwendet) oder erniedrigt wird (im umgekehrten Fall).

Eine Weiterbildung der Erfindung sieht daher vor, dass das erfindungsgemäße verfahren auf ein CDMA-Funkkommunikationssystem angewendet wird, bei dem unterschiedliche Verbindungen wahlweise durch unterschiedliche Spreizcodes und/oder unterschiedliche Verwürfelungscodes unterschieden werden können und bei dem für beide Kanäle der

Verbindung unterschiedliche Verwürfelungscodes verwendet werden.

Der erste Verwürfelungscode kann dann vorzugsweise ein primärer Verwürfelungscode und der zweite Verwürfelungscode ein sekundärer Verwürfelungscode sein, wobei bei Kanalzuteilungen innerhalb des Funkkommunikationssystems primäre Verwürfelungscodes im Vergleich zu sekundären Verwürfelungscodes vorrangig verwendet werden und Kanäle mit primären Verwürfelungscodes zueinander orthogonal sind, während sie zu den Kanälen mit sekundären Verwürfelungscodes nicht orthogonal sind. Bei UMTS verwenden benachbarte Funkzellen unterschiedliche primäre und unterschiedliche sekundäre Verwürfelungscodes.

Nach einer weiteren Ausführungsform der Erfindung, die alternativ oder zusätzlich zur vorgenannten Ausführungsform vorgesehen sein kann, wird die Änderungs der Empfangsbedingungen bei dem Wechsel der Kanäle der Verbindung durch Berücksichtigung von Funkausbreitungsbedingungen innerhalb eines Funkversorgungsbereiches, in dem die Datenübertragung erfolgt, bei der Einstellung des anfänglichen Wertes der Sendeleistung auf dem zweiten Kanal berücksichtigt. Auch die Ausbreitungsbedingungen einer Verbindung (z.B. Fading, Kanalbedingungen, Geschwindigkeit der an der Verbindung beteiligten Stationen) beeinflussen nämlich die Empfangsbedingungen einer Verbindung. Im bei der zuvor dargestellten Ausführungsform behandelten Fall können z.B. die aufgrund der Orthogonalität der Kanäle mit dem primären Verwürfelungscode besseren Empfangsbedingungen eines Kanals, der den primären Verwürfelungscode verwendet, teilweise oder vollständig dadurch zunichte gemacht werden, dass gerade dieser Kanal einem starken Fading ausgesetzt ist. Fading beeinflusst nämlich die empfangsseitigen Orthogonalitätseigenschaften einer Verbindung. Bei starkem Fading können daher die Vorteile der (sendeseitigen) Verwendung orthogonaler Kanäle wenigstens teilweise aufgehoben werden.

Fading ist abhängig von der Mehrwegeausbreitung eines Funksignals. Die Mehrwegeausbreitung hängt maßgeblich von der Topographie des Gebietes ab, in dem die Funkübertragung durchgeführt wird. Deswegen können anhand der Topographie, in der sich eine empfangende Station aufhält, Aussagen über ein zu erwartendes Fading getroffen werden. Derartige Aussagen sind dann abhängig vom Aufenthaltsort des Empfängers. Beispielsweise können Annahmen über unterschiedliches Fading pro Funkzelle getroffen werden, es ist jedoch auch möglich, für Teilbereiche einer Funkzelle unterschiedliche Fadingbedingungen anzunehmen.

Es kann günstig sein, wenn die berücksichtigten Fadingbedingungen spezifisch für die betrachtete Verbindung sind. Hierfür können z.B. Informationen über den Aufenthaltsort der empfangenden Station oder über relative Geschwindigkeit zwischen sendender und empfangender Station herangezogen werden.

Denn Fading kann ortsabhängig und geschwindigkeitsabhängig sein.

Des weiteren können im Falle einer bidirektionalen Verbindung für die Bestimmung der Ausbreitungsbedingungen in der einen Richtung (und damit auch für die Bestimmung ihrer Empfangsbedingungen) Informationen über die Ausbreitungsbedingungen in der entgegengesetzten Übertragungsrichtung berücksichtigt werden. D.h. der Sender der Daten der Verbindung ermittelt anhand von vom Empfänger der Daten an ihn übermittelter Signale die Fadingbedingungen für seinen Empfang und unterstellt, dass die Fadingbedingungen in umgekehrter Übertragungsrichtung ähnlich sind.

Nach einer Ausführungsform der Erfindung wird die Änderung der Empfangsbedingungen durch Berücksichtigung von empfängerseitigen Orthogonalitätseigenschaften wenigstens eines der beiden Kanäle bei der Einstellung des anfänglichen wertes der Sendeleistung auf dem zweiten Kanal berücksichtigt. Es kann beispielsweise berücksichtigt werden, ob die empfängerseitige Orthogonalität eines der beiden Kanäle, der einen Verwürfelungscode verwendet, relativ gut oder relativ schlecht ist. Wie zuvor gesagt, kann die empfängerseitige Orthogonalität eines Kanals, der einen primären Verwürfelungscode verwendet, zu Kanälen, die ebenfalls diesen primären Verwürfelungscode verwenden, beispielsweise bei starkem Fading vermindert sein.

Nach einer vorteilhaften Weiterbildung wird die Änderung der Empfangsbedingungen durch Berücksichtigung einer Auslastung eines Funkversorgungsbereiches, in dem die Datenübertragung erfolgt, bei der Einstellung des anfänglichen Wertes der Sendeleistung auf dem zweiten Kanal berücksichtigt. Dies ermöglicht es, das Verhältnis der Interferenzen für die beiden Kanäle der Verbindung abzuschätzen. Für den zuvor betrachteten Fall, bei dem ein primärer und ein sekundärer Verwürfelungscode verwendet wird, werden die Unterschiede zwischen den Interferenzen der beiden Kanäle umso größer, je größer die Auslastung der jeweiligen Funkzelle ist. Denn da Verbindungen bei UMTS vorwiegend den primären Verwürfelungscode verwenden, verstärkt sich die Interferenz für Kanäle mit dem sekundären Verwürfelungscode, während sie für Kanäle mit dem primären Verwürfelungscode aufgrund der Orthogonalität zwischen diesen Kanälen annähernd gleich bleibt.

Nach einer Weiterbildung der Erfindung werden für beide Kanäle Spreizcodes mit unterschiedlichen Spreizfaktoren verwendet und für den anfänglichen Wert der Sendeleistung auf dem zweiten Kanal wird zusätzlich ein Verhältnis der Spreizfaktoren der beiden Kanäle berücksichtigt. D.h. neben der Berücksichtigung der unterschiedlichen Empfangsbedingungen auf beiden Kanälen wird zusätzlich berücksichtigt, dass die Verwendung eines anderen Spreizfaktors zu einer Anpassung der momentan verwendeten Sendeleistung führen muss. Dabei kann die Anpassung der Sendeleistung aufgrund veränderter Empfangsbedingungen die Anpassung aufgrund veränderter Spreizfaktoren (wenigstens teilweise) kompensieren oder aber zu einer noch stärkeren Anpassung der Sendeleistung führen.

Nach einer Weiterbildung der Erfindung erfolgt während der Verwendung des zweiten Kanals für die Verbindung eine Unterbrechung der Datenübertragung, um während der Übertragungspause einer die Daten der Verbindung empfangenden Teilnehmerstation Messungen auf weiteren Kanälen zu ermöglichen, und nach der Datenübertragung über den zweiten Kanal wird wieder auf den ersten Kanal gewechselt. Dies ermöglicht z.B. die Anwendung der Erfindung für den oben erwähnten compressed mode bei UMTS.

Die erfindungsgemäße Station zum Übertragen der Daten der Verbindungen weist die Mittel bzw. Komponenten auf, die zur Durchführung des erfindungsgemäßen Verfahrens sowie seiner Aus- und Weiterbildungen notwendig sind. Bei der erfindungsgemäßen Station kann es sich um eine beliebige sendende Station eines beliebigen Funkkommunikationssystems handeln. Insbesondere kann es sich dabei um eine Basisstation eines UMTS-Mobilfunksystems handeln.

Im Folgenden wird die Erfindung anhand von in den Figuren dargestellten Ausführungsbeispielen näher erläutert. Es zeigen:
- Figur 1: ein Ausführungsbeispiel der Erfindung,
- Figur 2: die senderseitige Verarbeitung von Daten für das Ausführungsbeispiel aus Figur 1 und
- Figur 3: zwei Zeitdiagramme zum Ausführungsbeispiel aus Figur 1.

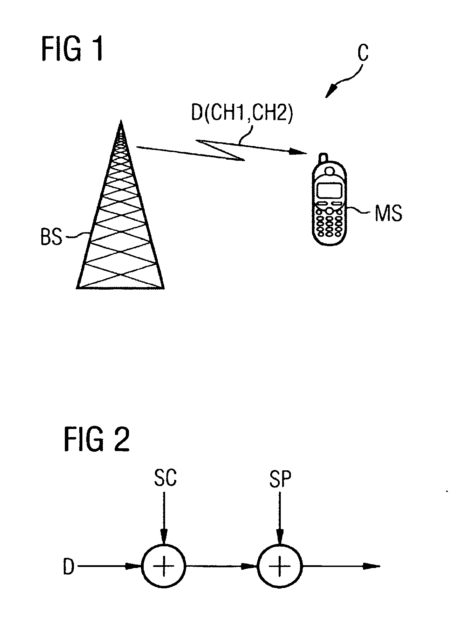

Figur 1 zeigt einen Ausschnitt eines UMTS-FDD-Mobilfunksystems, obwohl die Erfindung auch auf beliebige andere Mobilfunksysteme und sogar beliebige andere Funkkommunikationssysteme mit statischen oder mobilen Funkstationen anwendbar ist. Dargestellt sind innerhalb einer Funkzelle C eine die Funkzelle versorgende Basisstation BS (bei UMTS als "Node B" bezeichnet) sowie eine Mobilstation MS, zu der von der Basisstation BS Daten D einer Verbindung übertragen werden sollen. Dabei erfolgt während des Betriebes der Verbindung ein Wechsel von einem ersten Kanal CH1 auf einen zweiten Kanal CH2.

Figur 2 zeigt schematisch, wie bei UMTS die Daten der Verbindung D sendeseitig (also auf Seiten der Basisstation BS) zunächst mit einem Verwürfelungscode SC (scrambling code) verwürfelt und anschließend die verwürfelten Daten mit einem Spreizcode SP (spreading code) gespreizt werden. Beim Spreizen wird jedes Bit der verwürfelten Daten D mit einer Spreizcode-spezifischen Anzahl von Chips gespreizt. Anschließend werden die gespreizten Daten über die Luft zum Empfänger übertragen. Empfängerseitig (in der Mobilstation MS) erfolgt dann ein Entspreizen (despreading) der empfangenden Daten D sowie ein Entwürfeln (descrambling).

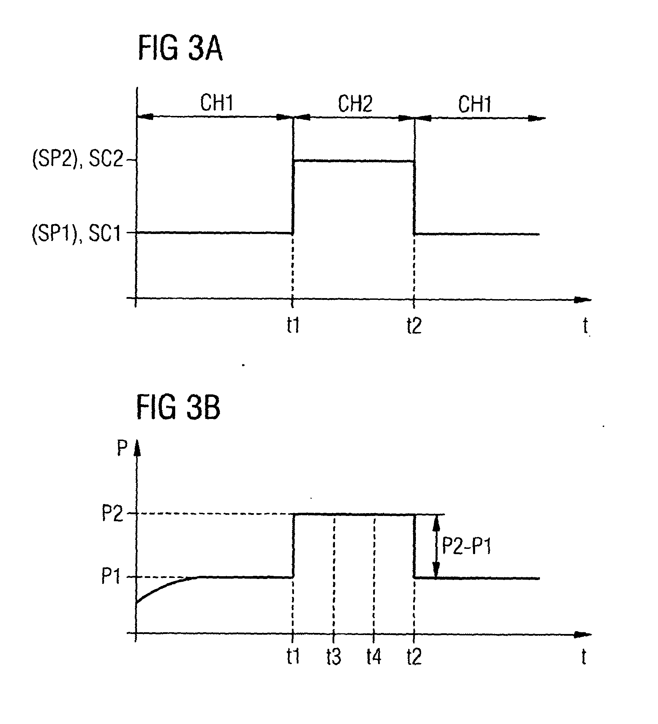

Figur 3A zeigt, dass für die Verbindung zwischen der Basisstation BS und der Mobilstation MS vor einem ersten Zeitpunkt t1 und nach einem zweiten Zeitpunkt t2 eine erster Verwürfelungscode SC1 verwendet wird. Zwischen den beiden Zeitpunkten t1 und t2 wird dagegen eine zweiter Verwürfelungscode SC2 verwendet. Dabei handelt es sich bei dem ersten Verwürfelungscode SC1 um einen primären Verwürfelungscode des betrachteten UMTS-FDD-Mobilfunksystems und beim zweiten Verwürfelungscode um einen sekundären Verwürfelungscode. Diese Verwürfelungscode sind der Funkzelle C, die von der Basisstation BS versorgt wird, zugeteilt. Ferner wird angenommen, dass für den ersten Kanal CH1 ein erster Spreizcode SP1 und für den zweiten Kanal CH2 ein zweiter Spreizcode SP2 verwendet wird. Diese weisen bei diesem ersten Ausführungsbeispiel gleiche Spreizfaktoren (also die gleiche Anzahl von Chips) auf.

Figur 3B zeigt den Verlauf der Sendeleistung P der Basisstation BS für die Übertragung der Daten D aus Figur 1 über die beiden Kanäle CH1, CH2. Vor dem ersten Zeitpunkt t1 erfolgt eine Regelung der Empfangsqualität an der Mobilstation MS (mittels der für sich genommen für UMTS-FDD bekannten Verfahren) durch entsprechende Steuerung der Sendeleistung P der Basisstation BS. Vereinfachend wird angenommen, dass die Sendeleistung P für eine gewisse Zeitspanne vor dem ersten Zeitpunkt t1 konstant auf einem ersten Wert P1 gehalten wird. Nach dem Zeitpunkt t1, zu dem der Wechsel vom ersten Kanal CH1 auf den zweiten Kanal CH2 erfolgt, wird die Sendeleistung P auf einen zweiten Wert P2 erhöht. Dabei ist der Grad der Erhöhung der Sendeleistung P bei diesem Ausführungsbeispiel abhängig von Unterschied zwischen den Interferenzen für den ersten Kanal CH1 und den zweiten Kanal CH2. Die Interferenzen der beiden Kanäle CH1, CH2 unterscheiden sich, wie oben dargelegt, aufgrund der unterschiedlichen Orthogonalitätseigenschaften dieser Kanäle zu Kanälen anderer Verbindungen in der Funkzelle C, die ebenfalls den primären oder den sekundären Verwürfelungscode verwenden. Wie weiter oben gesagt, sind Kanäle mit dem primären Verwürfelungscode, die bevorzugt in der Funkzelle C verwendet werden, zueinander orthogonal, während sie nicht orthogonal zu den Kanälen mit dem sekundären Verwürfelungscode sind.

Die gute Orthogonalität der Kanäle mit dem primären Code kann jedoch durch Ausbreitungsbedingungen, speziell Fading, beeinflusst werden. So sind diese Kanäle zwar senderseitig (bei der Basisstation BS) orthogonal, aufgrund der Mehrwegeausbreitung kommt es jedoch empfängerseitig (an der Mobilstation MS) dazu, dass die Signale unterschiedlicher Verbindungen, die den primären Verwürfelungscodes verwenden, nicht mehr orthogonal zueinander sind. So kann es auch zu Störungen zwischen Kanälen mit dem primären Code kommen. Als Folge dessen können sich die Interferenzbedingungen für den ersten und den zweiten Kanal angleichen, so dass zu den beiden Zeitpunkten t1 und t2 nur noch ein geringerer Unterschied zwischen dem ersten Wert P1 und dem zweiten Wert P2 der Sendeleistung P vorzusehen ist. Um die Stärke des Fadings bzw. der Verschlechterung der Ausbreitungsbedingungen für die Verbindung zu ermitteln, weisen die Basisstation BS und/oder die Mobilstation MS Mittel auf, mit denen Faktoren ermittelt werden können, die Rückschlüsse auf die Ausbreitungsbedingungen, speziell das Fading, zu lassen. Dies sind im vorliegenden Fall Mittel zum Ermitteln der Geschwindigkeit der Mobilstation MS, denn Fading ist geschwindigkeitsabhängig. Beispielsweise können die Ausbreitungsbedingungen durch eine Kanalschätzung ermittelt werden. U.a. lassen sich hieraus die Zahl der Ausbreitungspfade und die Geschwindigkeit der an der Verbindung beteiligten Stationen ermitteln.

Bei anderen Ausführungsbeispielen können auch Mittel zum Feststellen der Position der Mobilstation MS innerhalb der Funkzelle C vorgesehen sein, da Fading auch abhängig von der Position sein kann. In weiterer Abhängigkeit von Informationen über die Topographie der Funkzelle C (die das Fading beeinflusst) kann dann (z.B. in der Basisstation BS oder einer zentralen Einheit des Funkkommunkationssystems, wie z.B. einem Basisstationscontroller) entschieden werden, wie stark das Fading ist und inwiefern dadurch die Orthogonalität des ersten Kanals CH1 mit dem ersten Verwürfelungscode SC1 bezüglich anderer Kanäle mit dem primären Verwürfelungscode momentan verschlechtert wird.

Nach dem zweiten Zeitpunkt t2 in Figur 3B, bei dem ein erneuter Wechsel auf den ersten Kanal CH1 erfolgt, wird die Sendeleistung P wieder um einen entsprechenden Betrag auf den ersten Wert P1 reduziert. Dabei wird vereinfachend angenommen, dass sich die Empfangsbedingungen zwischenzeitlich (zwischen den beiden Zeitpunkten t1 und t2) nicht ändern, so dass keine Änderung der Sendeleistung P erfolgen muss. Ansonsten erfolgt während dieses Zeitraums ebenfalls eine Regelung der Empfangsqualität an der Mobilstation MS durch Steuerung der Sendeleistung P der Basisstation BS.

Bei einem zweiten Ausführungsbeispiel der Erfindung weisen die beiden Spreizcodes SP1, SP2 der beiden Kanäle CH1, CH2 unterschiedliche Spreizfaktoren auf. Die Sendeleistung P zu Beginn der Übertragung über den zweiten Kanal CH2 wird dann um einen zusätzlichen Faktor angepasst, der dem Verhältnis der Spreizfaktoren entspricht. Dies kann dazu führen, dass beim Wechsel vom ersten auf den zweiten Kanal die Sendeleistung P stärker oder aber auch schwächer erhöht wird als im in Figur 3B gezeigten Fall. Es ist sogar möglich, dass ein Überkompensation erfolgt, so dass statt einer Anhebung der Sendeleistung eine Absenkung erfolgt. Beim Wechsel vom zweiten Kanal CH2 auf den ersten Kanal CH1 erfolgt eine entsprechende Anpassung der Sendeleistung auch in diesem Ausführungsbeispiel.

Beim zweiten Ausführungsbeispielen ist es möglich, dass während der Verwendung des zweiten Kanals CH2 in den compressed mode des UMTS-FDD-Standards gewechselt wird. Bei diesem ist der Spreizfaktor reduziert gegenüber der Verwendung des ersten Kanals CH1, d.h. die Spreizung erfolgt nun mit einer geringeren Anzahl von Chips. Dies hat zur Folge, dass die Sendeleistung P allein aus diesem Grund schon erhöht werden muss. So kommt es zu einer notwendigen stärkeren Anhebung der Sendeleistung zum ersten Zeitpunkt t1 als beim ersten Ausführungsbeispiel. Bei diesem zweiten Ausführungsbeispiel wird während des compressed mode bei der Verwendung des zweiten Kanals CH2 die Datenübertragung von der Basisstation BS zur Mobilstation MS vorübergehend zwischen einem dritten Zeitpunkt t3 und einem vierten Zeitpunkt t4 unterbrochen, so dass die Mobilstation MS während dieses Zeitraums Messungen anderer Kanäle durchführen kann.

Bei den hier betrachteten Ausführungsbeispielen weist die Basisstation BS (bei anderen Ausführungsbeispielen kann dies auch durch eine andere Einheit des Funkkommunikationssystems erfolgen) Mittel auf, um die Auslastung ihrer Funkzelle C bezüglich Kanälen zu ermitteln. Dies geschieht günstiger Weise durch getrennte Ermittlung der Auslastung hinsichtlich des primären Verwürfelungscodes einerseits und des sekundären Verwürfelungscodes andererseits. Dies kann insbesondere durch Ermittlung der Verteilung der Gesamtsendeleistung der Basisstation auf Kanäle mit primärem und sekundärem Verwürfelungscode geschehen (diese Information liegt in der Basisstation i.d.R. vor). Da i.d.R. überwiegend Kanäle mit primärem Verwürfelungscode verwendet werden, kann anhand der Bestimmung der Gesamtsendeleistung in einer Funkzelle auf die Interferenz für die Kanäle mit primären bzw. sekundären Codes geschlossen werden. Mit dieser Kenntnis ist es dann möglich, zu entscheiden, wie stark die Interferenzen für Kanäle mit dem primären Verwürfelungscode (erster Verwürfelungscode SC1), insbesondere also für den ersten Kanal CH1, im Verhältnis zu den Interferenzen für Kanäle mit dem sekundären Verwürfelungscode (zweiter Verwürfelungscode SC2), insbesondere also für den zweiten Kanal CH2, ist. Dieses Verhältnis wird verwendet, um das Maß der Veränderung der Sendeleistung P zu den Zeitpunkten t1, t2, also dem Wechsel zwischen den beiden Kanälen CH1, CH2, zu bestimmen.

Bei anderen Ausführungsbeispielen ist es auch möglich, die Interferenzen für die beiden Kanäle CH1, CH2 direkt an der Mobilstation MS durch entsprechende Messungen zu ermitteln, z.B. durch Ermittlung des Signal-zu-Rausch-Verhältnisses oder des Signal-zu-Interferenz-Verhältnisses.

## Patentansprüche

1. Verfahren zum Einstellen der Sendeleistung (P) für die Übertragung von Daten (D) einer Verbindung in einem Funkkommunikationssystem, bei dem
- zunächst Daten (D) der Verbindung über einen ersten Kanal (CH1) übertragen werden, während die Qualität der Datenübertragung geregelt wird, indem die Sendeleistung (P) entsprechend verändert wird,
- anschließend Daten (D) der Verbindung über einen zweiten Kanal (CH2) übertragen werden, wobei die Sendeleistung (P) anfänglich auf einen Wert (P2) eingestellt wird, der vom Wert (P1) der Sendeleistung am Ende der Übertragung über den ersten Kanal (CH1) sowie von einer Änderung der Empfangsbedingungen der Verbindung beim Wechsel vom ersten Kanal (CH1) auf den zweiten Kanal (CH2) abhängt.

2. Verfahren nach Anspruch 1, bei dem
die Änderung der Empfangsbedingungen durch Berücksichtigung von Interferenzen auf den beiden Kanälen (CH1, CH2) bei der Einstellung des anfänglichen Wertes (P2) der Sendeleistung auf dem zweiten Kanal (CH2) berücksichtigt wird.

3. Verfahren nach einem der vorstehenden Ansprüche, bei dem die Änderung der Empfangsbedingungen durch Berücksichtigung von Ausbreitungsbedingungen innerhalb eines Funkversorgungsbereiches (C), in dem die Datenübertragung erfolgt, bei der Einstellung des anfänglichen Wertes (P2) der Sendeleistung auf dem zweiten Kanal (CH2) berücksichtigt wird.

4. Verfahren nach Anspruch 3, bei dem
die Ausbreitungsbedingungen spezifisch für die Verbindung sind.

5. Verfahren nach einem der vorstehenden Ansprüche, bei dem die Änderungder Empfangsbedingungen durch Berücksichtigung einer Auslastung eines Funkversorgungsbereiches (C), in dem die Datenübertragung erfolgt, bei der Einstellung des anfänglichen Wertes (P2) der Sendeleistung auf dem zweiten Kanal (CH2) berücksichtigt wird.

6. Verfahren nach einem der vorstehenden Ansprüche, bei dem die Änderung der Empfangsbedingungen durch Berücksichtigung von empfängerseitigen Orthogonalitätseigenschaften wenigstens eines der beiden Kanäle (CH1, CH2) bei der Einstellung des anfänglichen Wertes (P2) der Sendeleistung auf dem zweiten Kanal (CH2) berücksichtigt wird.

7. Verfahren nach einem der vorstehenden Ansprüche,
- das auf ein CDMA-Funkkommunikationssystem angewendet wird, bei dem unterschiedliche Verbindungen wahlweise durch unterschiedliche Spreizcodes (SP) und/oder unterschiedliche Verwürfelungscodes (SC) unterschieden werden können,
- und bei dem für beide Kanäle (CH1, CH2) der Verbindung unterschiedliche Verwürfelungscodes (SC1, SC2) verwendet werden.

8. Verfahren nach Anspruch 7, bei dem
- der erste Verwürfelungscode (SC1) ein primärer Verwürfelungscode und der zweite Verwürfelungscode (SC2) ein sekundärer Verwürfelungscode ist,
- wobei bei Kanalzuteilungen innerhalb des Funkkommunikationssystems der primäre Verwürfelungscode im Vergleich zum sekundären Verwürfelungscode vorrangig verwendet wird.

9. Verfahren nach einem der Ansprüche 7 oder 8, bei dem
- für beide Kanäle Spreizcodes (SP1, SP2) mit unterschiedlichen Spreizfaktoren verwendet werden
- und für die Einstellung des anfänglichen Wertes der Sendeleistung (P2) auf dem zweiten Kanal (CH2) zusätzlich ein Verhältnis der Spreizfaktoren der beiden Kanäle (CH1, CH2) berücksichtigt wird.

10. Verfahren nach einem der Ansprüche 7 bis 9, bei dem
- während der Verwendung des zweiten Kanals (CH2) für die Verbindung eine Unterbrechung der Datenübertragung erfolgt, um während der Übertragungspause einer die Daten (D) der Verbindung empfangenden Teilnehmerstation (MS) Messungen auf weiteren Kanälen zu ermöglichen,
- und nach der Datenübertragung über den zweiten Kanal (CH2) wieder auf den ersten Kanal (CH1) gewechselt wird.

11. Station (BS) zum Übertragen von Daten (D) wenigstens einer Verbindung in einem Funkkommunikationssystem,
- mit Mitteln zum Übertragen von Daten (D) der Verbindung über einen ersten Kanal (CH1),
- mit Mitteln zum Regeln der Qualität der Datenübertragung über den ersten Kanal (CH1) durch entsprechende Veränderung der Sendeleistung (P),
- mit Mitteln zum anschließenden Übertragen von Daten (D) der Verbindung über einen zweiten Kanal (CH2),
- mit Mitteln zum anfänglichen Einstellen der Sendeleistung (P) auf dem zweiten Kanal (CH2) auf einen Wert (P2), der vom Wert (P1) der Sendeleistung am Ende der Übertragung über den ersten Kanal (CH1) sowie von einer Änderung von Empfangsbedingungen der Verbindung beim Wechselvom ersten Kanal (CH1) auf den zweiten Kanal (CH2) abhängt.

## Claims

1. Method for adjusting the output power (P) for the transmission of data (D) of a link in a radio communication system, in which
- data (D) of the link are firstly transmitted via a first channel (CH1) while the quality of the data transmission is controlled by correspondingly changing the output power (P),
- data (D) of the link are then transmitted via a second channel (CH2), the output power (P) initially being adjusted to a value (P2) which depends on the value (P1) of the output power at the end of the transmission via the first channel (CH1) and on a change in the receiving conditions of the link during the change from the first channel (CH1) to the second channel (CH2).

2. Method according to Claim 1, in which the change in receiving conditions is taken into consideration by considering interferences on the two channels (CH1, CH2) during the adjustment of the initial value (P2) of the output power on the second channel (CH2).

3. Method according to one of the preceding claims, in which the change in receiving conditions is taken into consideration by considering propagation conditions within a radio coverage area (C) in which the data transmission takes place, during the adjustment of the initial value (P2) of the output power on the second channel (CH2).

4. Method according to Claim 3, in which the propagation conditions are specific to the link.

5. Method according to one of the preceding claims, in which the change in receiving conditions is taken into consideration by considering a utilization of a radio coverage area (C) in which the data transmission takes place, during the adjustment of the initial value (P2) of the output power on the second channel (CH2).

6. Method according to one of the preceding claims, in which the change in receiving conditions is taken into consideration by considering orthogonality characteristics at the receiver end of at least one of the two channels (CH1, CH2) during the adjustment of the initial value (P2) of the output power on the second channel (CH2).

7. Method according to one of the preceding claims,
- which is applied to a CDMA radio communication system in which different links can be optionally distinguished by different spreading codes (SP) and/or different scrambling codes (SC),
- and in which different scrambling codes (SC1, SC2) are used for both channels (CH1, CH2) of the link.

8. Method according to Claim 7, in which
- the first scrambling code (SC1) is a primary scrambling code and the second scrambling code (SC2) is a secondary scrambling code,
- wherein, during channel allocations within the radio communication system, the primary scrambling code is used with priority in comparison with the secondary scrambling code.

9. Method according to one of Claims 7 or 8, in which
- spreading codes (SP1, SP2) having different spreading factors are used for both channels
- and a ratio of the spreading factors of the two channels (CH1, CH2) is additionally taken into consideration for the adjustment of the initial value of the output power (P2) on the second channel (CH2).

10. Method according to one of Claims 7 to 9, in which
- during the use of the second channel (CH2) for the link, the data transmission is interrupted in order to enable a subscriber station (MS) receiving the data (D) of the link to carry out measurements on other channels,
- and after the data transmission via the second channel (CH2), the system changes back to the first channel (CH1).

11. Station (BS) for transmitting data (D) of at least one link in a radio communication system,
- with means for transmitting data (D) of the link via a first channel (CH1),
- with means for controlling the quality of the data transmission via the first channel (CH1) by correspondingly changing the output power (P),
- with means for then transmitting data (D) of the link via a second channel (CH2),
- with means for initially adjusting the output power (P) on the second channel (CH2) to a value (P2) which depends on the value (P1) of the output power at the end of the transmission via the first channel (CH1) and on a change in receiving conditions of the link when changing from the first channel (CH1) to the second channel (CH2).

## Revendications

1. Procédé pour régler la puissance d'émission (P) pour la transmission de données (D) d'une liaison dans un système de radiocommunications, dans lequel
- des données (D) de la liaison sont d'abord transmises sur un premier canal (CH1) tandis que la qualité de la transmission de données est réglée en modifiant en conséquence la puissance d'émission (P),
- les données (D) de la liaison sont transmises ensuite sur un second canal (CH2), la puissance d'émission (P) étant réglée au début sur une valeur (P2) qui dépend de la valeur (P1) de la puissance d'émission à la fin de la transmission sur le premier canal (CH1) ainsi que d'une modification des conditions de réception de la liaison lors du passage du premier canal (CH1) sur le second canal (CH2).

2. Procédé selon la revendication 1, dans lequel la modification des conditions de réception est prise en considération, lors du réglage de la valeur initiale (P2) de la puissance d'émission sur le second canal (CH2), en tenant compte d'interférences sur les deux canaux (CH1, CH2).

3. Procédé selon l'une des revendications précédentes, dans lequel la modification des conditions de réception est prise en considération, lors du réglage de la valeur initiale (P2) de la puissance d'émission sur le second canal (CH2), en tenant compte de conditions de propagation à l'intérieur d'une zone de couverture radio (C) dans laquelle se déroule la transmission de données.

4. Procédé selon la revendication 3, dans lequel les conditions de propagation sont spécifiques pour la liaison.

5. Procédé selon l'une des revendications précédentes, dans lequel la modification des conditions de réception est prise en considération, lors du réglage de la valeur initiale (P2) de la puissance d'émission sur le second canal (CH2), en tenant compte d'une charge d'une zone de couverture radio (C) dans laquelle se déroule la transmission de données.

6. Procédé selon l'une des revendications précédentes, dans lequel la modification des conditions de réception est prise en considération, lors du réglage de la valeur initiale (P2) de la puissance d'émission sur le second canal (CH2), en tenant compte de propriétés d'orthogonalité, côté récepteur, d'au moins un des deux canaux (CH1, CH2).

7. Procédé selon l'une des revendications précédentes,
- qui est utilisé sur un système de radiocommunications CDMA dans lequel différentes liaisons peuvent être différenciées, facultativement, par des codes d'étalement (SP) différents et/ou des codes d'embrouillage (SC) différents
- et dans lequel des codes d'embrouillage différents (SC1, SC2) sont utilisés pour les deux canaux (CH1, CH2) de la liaison.

8. Procédé selon la revendication 7, dans lequel
- le premier code d'embrouillage (SC1) est un code d'embrouillage primaire et le second code d'embrouillage (SC2) est un code d'embrouillage secondaire,
- dans lequel, lors d'affectations de canaux à l'intérieur du système de radiocommunications, le code d'embrouillage primaire est utilisé prioritairement par rapport au code d'embrouillage secondaire.

9. Procédé selon l'une des revendications 7 ou 8, dans lequel
- des codes d'étalement (SP1, SP2) ayant des facteurs d'étalement différents sont utilisés pour les deux canaux
- et un rapport des facteurs d'étalement des deux canaux (CH1, CH2) est pris en considération, en plus, pour le réglage de la valeur initiale de la puissance d'émission (P2) sur le second canal (CH2).

10. Procédé selon l'une des revendications 7 à 9, dans lequel
- une interruption de la transmission de données a lieu pendant l'utilisation du second canal (CH2) pour la liaison pour permettre des mesures sur d'autres canaux pendant la pause de transmission d'une station d'abonné (MS) recevant les données (D) de la liaison,
- et on repasse sur le premier canal (CH1) après la transmission de données sur le second canal (CH2).

11. Station (BS) pour la transmission de données (D) d'au moins une liaison dans un système de radiocommunications,
- comprenant des moyens de transmission de données (D) de la liaison sur un premier canal (CH1),
- comprenant des moyens de réglage de la qualité de la transmission de données sur le premier canal (CH1) par une modification correspondante de la puissance d'émission (P),
- comprenant des moyens de transmission consécutive de données (D) de la liaison sur un second canal (CH2),
- comprenant des moyens de réglage initial de la puissance d'émission (P) sur le second canal (CH2) sur une valeur (P2) qui dépend de la valeur (P1) de la puissance d'émission à la fin de la transmission sur le premier canal (CH1) ainsi que d'une modification de conditions de réception de la liaison lors du passage du premier canal (CH1) sur le second canal (CH2).
